Europäisches Patentamt

European Patent Office

Office européen des brevets

(11) Veröffentlichungsnummer: **0 313 913**
**A2**

## (12) EUROPÄISCHE PATENTANMELDUNG

(21) Anmeldenummer: 88116856.1

(22) Anmeldetag: 11.10.88

(51) Int. Cl.⁴: **G05D 23/13**

(30) Priorität: 28.10.87 DE 3736406

(43) Veröffentlichungstag der Anmeldung:
**03.05.89 Patentblatt 89/18**

(84) Benannte Vertragsstaaten:
**AT BE CH DE ES FR GB GR IT LI NL SE**

(71) Anmelder: **Baus, Heinz Georg**
**Wartbodenstrasse 35**
**CH-3626 Hünibach-Thun(CH)**

(72) Erfinder: **Baus, Heinz Georg**
**Wartbodenstrasse 35**
**CH-3626 Hünibach-Thun(CH)**

(74) Vertreter: **Klose, Hans, Dipl.-Phys. et al**
**Kurfürstenstrasse 32**
**D-6700 Ludwigshafen(DE)**

(54) **Mischvorrichtung.**

(57) Eine Mischvorrichtung, insbesondere für Duschen oder Bäder, enthält eine Mischarmatur, welcher warmes und kaltes Wasser zuführbar ist und welche ein Stellglied zum Einstellen des Mischungsverhältnisses aufweist. Die Mischvorrichtung soll dahingehend weitergebildet werden, daß bei einfacher Konstruktion dem Mischwasser ein Mittel zugesetzt werden kann. Hierzu ist eine elektronische Steuereinheit (14) und eine Eingabeeinheit (18, 19) vorgesehen, welche zum Ansteuern eine Speichereinheit (34) mit wenigstens einem Behälter (36, 37) zur Aufnahme des Mittels aufweist. Es ist ferner eine bevorzugt als Pumpe ausgebildete Zuführeinrichtung (38, 39) vorgesehen, mittels welcher bei Betätigung der Eingabeeinrichtung (18, 19) das Mittel durch Leitungen, insbesondere Schläuche, aus der Spendereinheit (34) förderbar ist.

Fig. 1

EP 0 313 913 A2

## Mischvorrichtung

Die Erfindung bezieht sich auf eine Mischvorrichtung, insbesondere für Duschen oder Bäder, mit einer Mischarmatur, welcher warmes und kaltes Wasser zuführbar ist und welche ein Stellglied zum Einstellen des Mischungsverhältnises des Wassers aufweist.

Aus der deutschen Offenlegungsschrift 29 25 234 ist eine derartige Mischvorrichtung zum Bereitstellen von Mischwasser bekannt, dessen Temperatur entsprechend dem eingestellten Mischungsverhältnis des zugeführten warmen und kalten Wassers vorgebbar ist. Die Vorrichtung enthält einen elektromotorischen Antrieb und einen die Austrittstemperatur des Mischwassers sensierenden Meßfühler, der mit einer Regeleinheit verbunden ist. Mittels der Regeleinheit wird entsprechend einem eingestellten Sollwert das Mischungsverhältnis für das Mischwasser und damit dessen Temperatur eingestellt. Die Einstellung des Sollwertes für die Temperatur des Mischwassers erfolgt unmittelbar an der Mischarmatur, und eine Fernbedienung ist nicht möglich. Ferner können dem Mischwasser gewünschte Mittel bzw. Lotions, Shampoo, Duschmittel, Badezusätze oder dergleichen, nicht zugegeben werden.

Der Erfindung liegt die Aufgabe zu Grunde, die Vorrichtung der genannten Art dahingehend weiterzubilden, daß eine schnelle und zuverlässige Einstellung und/oder Veränderung der Temperatur des Mischwassers vorgenommen werden kann. Gegebenenfalls soll die Einstellung extern, beispielsweise unmittelbar vom Duschkopf einer Brause aus, erfolgen können. Ferner soll dem Mischwasser bei Bedarf ein Mittel wie eine Lotion, zugeführt werden, wobei auch insoweit eine einfache Bedienbarkeit und Einstellung erreicht werden soll. Die Vorrichtung soll ein kleines Bauvolumen erfordern und in einfacher Weise von einem Benutzer zu Handhaben sein. Die Vorrichtung soll in einem Duschraum, Bad oder dergleichen in einfacher Weise installiert werden können und ein Benutzer soll mit geringem Aufwand das gewünschte Mittel in die Vorrichtung eingeben können, damit das Mittel dann bei Bedarf über geeignete Leitungen, Schläuche oder dergleichen insbesondere einem Brausekopf zugeführt werden kann.

Die Lösung dieser Aufgabe erfolgt gemäß den im Kennzeichen des ersten Patentanspruchs angegebenen Merkmalen. In den weiteren Ansprüchen sind zweckmäßige Ausgestaltungen sowie Weiterbildungen der Erfindung angegeben. Ferner werden anhand der Ausführungsbeispiele wichtige Konstruktionsmerkmale und vorteilhafte Ausgestaltungen im einzelnen erläutert.

Die erfindungsgemäße Vorrichtung zeichnet sich durch eine einfache und gleichwohl zuverlässige Konstruktion aus und ermöglicht eine schnelle und zuverlässige Einstellung der Temperatur des Mischwassers. Änderungen der Temperatur und/oder des Druckes des zugeführten Kaltwassers oder Warmwassers werden mittels der die Stelleinheit beaufschlagenden elektronischen Steuereinheit sehr schnell ausgeregelt. Die Einstellung und Vorgabe der Temperatur folgt mittels der Eingabeeinheit, die im Rahmen der Erfindung beabstandet von den Mischarmatur, insbesondere in einem Brausekopf, angeordnet sein kann. Die Mischarmatur befindet sich zweckmäßigerweise innerhalb eines Gehäuses, das eine Anzeigeeinheit für die tatsächliche Mischtemperatur aufweist. In diesem Gehäuse ist ferner die elektronische Steuereinheit angeordnet sowie ein zur Stromversorgung vorgesehener Akku. Die Vorrichtung und insbesondere das Gehäuse weist eine Aufnahmeeinrichtung für den Akku auf, der bei Bedarf herausgenommen, wieder aufgeladen und eingesetzt werden kann. Aufgrund der Stromversorgung mittels des Akkus entfällt eine Verbindung zum Stromnetz, auch nicht über einen Netztransformator, so daß die im Naßbereich für Duschen oder Bäder geforderte hohe Sicherheit gewährleistet werden kann. Zweckmäßig weist die Vorrichtung auch eine Anzeige zum Ladezustand des Akku auf, so daß rechtzeitig die Wideraufladung bzw. der Austausch vorgenommen werden kann.

In einer besonderen Ausgestaltung ist eine Spendereinheit mit wenigstens einem Behälter für ein Mittel, insbesondere Lotion, Shampoo, Badezusatz oder dergleichen vorgesehen, und zwar insbesondere in dem bereits erwähnten Gehäuse, wobei die Abgabe mittels der genannten Steuereinheit vorgenommen wird. Die Steuereinheit mit den Betätigungselementen für eine Pumpe kann zweckmäßig extern von dem Gehäuse der Steuereinheit, und zwar insbesondere in einem Brausekopf angeordnet sein. Zwischem dem Gehäuse und dem Brausekopf sind in gewohnter Weise ein flexibler Schlauch für das Wasser und darüber hinaus elektrische Leitungen enthalten, mittels welchen die elektrischen Signale zur Betätigung der elektronischen Steuereinheit weitergeleitet werden. Die Vorrichtung enthält eine Pumpe, welche mittels der Elektronikeinheit aktivierbar ist, um über entsprechende Leitungen dem Brausekopf das Mischwasser und das Mittel zuführen zu können. Der Behälter für das Mittel, das als Shampoo, Duschmittel, Badezusatz oder dergleichen ausgebildet sein kann, ist herausklappbar oder herausnehmbar im Gehäuse, insbesondere unter einem Deckel, angeordnet.

Die Erfindung wird nachfolgend anhand der in der Zeichnung dargestellten Ausführungsbeispiele näher erläutert. Es zeigen:

Fig. 1 ein Funktionsschema eines ersten Ausführungsbeispiels,

Fig. 2 eine perspektivische Ansicht der Vorrichtung gemäß Fig. 1,

Fig. 3 explosionsartig den Aufbau der Mischarmatur mit Getriebe und einer Elektronikeinheit,

Fig. 4 eine Gesamtansicht eines zweiten Ausführungsbeispiels, das einen Brausekopf enthält und an der Wand (Aufputz) eines Dusch- oder Baderaumes befestigt werden kann,

Fig. 5 perspektivisch die Spendereinheit mit dem Behälter für das Mittel,

Fig. 6 den Aufbau des Brauseschlauchs mit einem Mehrfach-Kupplungsstück,

Fig. 7 einen Schnitt durch das Kupplungsstück gemäß Fig. 6,

Fig. 8 den Aufbau des Brausekopfes,

Fig. 9 vergrößert ein Teil eines Ventils mit Düse und einer Auslaufsicherung.

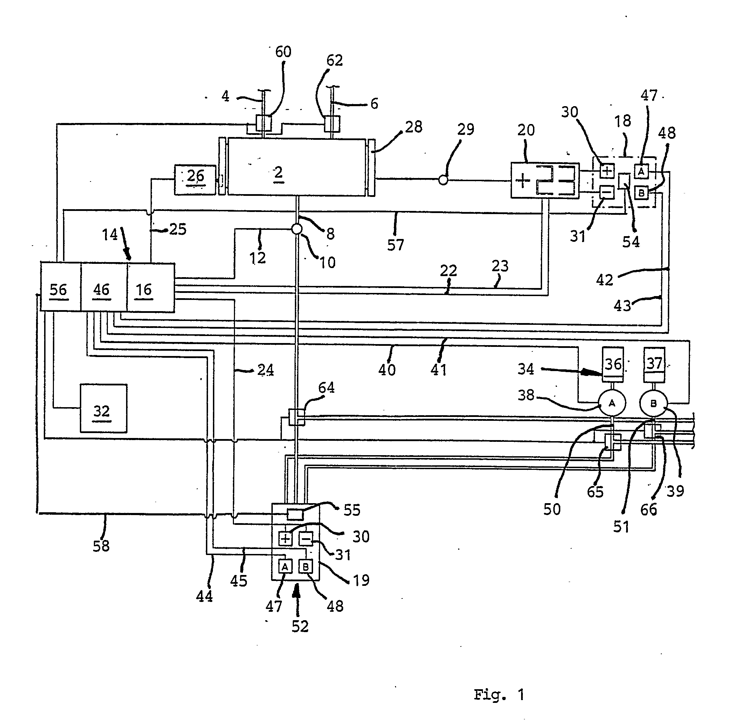

Fig. 1 zeigt ein Funktionsschema der Vorrichtung mit einer Mischarmatur 2, welcher über zwei Wasserleitungen 4, 6 warmes bzw. kaltes Wasser zugeführt werden kann. Diese Mischarmatur 2 enthält im Inneren ein Stellglied, mit welchem das Mischungsverhältnis des warmen und kalten Wassers veränderbar ist, wobei das auf eine gewünschte Temperatur eingestellte Mischwasser aus der Ausgangsleitung 8 abfließen kann. In der Leitung 8 für das Mischwasser ist zweckmäßigerweise möglichst nahe der Mischarmatur 2 ein Temperaturfühler 10 angeordnet, welcher über eine elektrische Leitung 12 mit einer elektronischen Steuereinheit 14 verbunden ist.

Die elektronische Steuereinheit 14 enthält eine erste Elektronikeinheit 16 zur Steuerung der Mischarmatur 2. Mit der ersten Elektronikeinheit 16 ist nicht nur der Temperaturfühler 10, sondern auch eine Eingabeeinheit 18 sowie eine Anzeigeeinheit 20 über elektrische Leitungen 22, 23 verbunden. Die Eingabeeinheit 18 und die Anzeigeeinheit können in dem gleichen Gehäuse wie die Mischarmatur 2 angeordnet sein. Eine zusätzliche Eingabeeinheit 19 kann, wie nachfolgend noch zu erläutern ist, auch extern im Brausekopf angeordnet sein. Auch diese erfindungsgemäß zusätzlich vorgesehene Eingabeeinheit 19 ist mittels einer elektrischen Leitung 24 mit der ersten Elektronikeinheit verbunden, wobei Eingabesignale folglich wahlweise über die Leitung 22 oder die Leitung 24 der elektronischen Steuereinheit 14 zuführbar sind. Schließlich ist mit der ersten Elektronikeinheit 16 über die elektrische Leitung 25 eine Stelleinheit 26 elektrisch verbunden. Diese Stelleinheit 26 ist im Rahmen der Erfindung als ein Gleichstrommotor ausgebildet, welcher über eine Welle, eine Getriebe oder eine sonstige kraftschlüssige Verbindung das Stellglied der Mischarmatur 2 in der einen oder anderen Richtung zwecks Vorgabe der Mischtemperatur verstellen kann. Die Mischarmatur 2 enthält ferner ein Stellrad 28, um ggf. manuell die Mischtemperatur einzustellen. Eine solche manuelle Einstellung kann beispielsweise bei Stromausfall und/oder zur Voreinstellung vorteilhaft sein. Die Eingabeeinheiten 18, 19 enthalten zwei Tasten 30, 31, welche mit Plus- bzw. Minus-Zeichen versehen sind. So kann beispielsweise durch Betätigen der Plus-Taste 30 die Temperatur erhöht werden, wobei der mittels des Temperaturfühlers 10 in der Ausgangsleitung 8 erfaßte Wert der Mischtemperatur auf der Anzeigeeinheit 20 angezeigt wird. Die Anzeigeeinheit 20 ist zweckmäßig als eine Digitalanzeige, ausgebildet, der von der ersten Elektronikeinheit 16 entsprechende Impulse zugeführt werden. Mit der ersten Elektronikeinheit 16 erfolgt die Regelung der Stelleinheit 26 in der Weise, daß die in der Ausgangsleitung 8 mit dem Temperaturfühler 10 gemessene Temperatur der gewünschten Wassertemperatur entspricht, wobei das Mischungsverhältnis von Warmwasser und Kaltwasser in der geforderten Weise geregelt wird.

Die Mischarmatur 2 enthält ferner erfindungsgemäß eine Verbrühschutzsicherung 29. Diese ist als eine mechanische Verriegelung in der Mischarmatur 2 ausgebildet, um die Stelleinheit 26 und/oder das Stellglied ab einer einstellbaren Wassertemperatur zu blockieren. Diese Verbrühschutzsicherung muß von Hand betätigt werden.

Zur Stromversorgung der elektronischen Steuereinheit 14, der Anzeige 20 und der Stelleinheit 26 ist ein wiederaufladbarer Akku 32 vorgesehen. Eine elektrische Verbindung zum Stromnetz ist somit nicht vorhanden, so daß die für den Naßbereich geltenden Sicherheitsvorschriften zuverlässig erfüllt werden und die beim Einsatz eines Netztrafos möglichen Risiken ausgeschlossen sind.

Die erfindungsgemäße Vorrichtung enthält ferner wenigstens eine Spender- oder Fördereinheit 34, wobei in der Zeichnung zwei separate Behälter 36, 37 und Pumpen 38, 39 vorgesehen sind. In die Behälter 36, 37 kann das gewünschte Mittel, wie Lotion, Shampoo, Duschmittel und dergleichen eingefüllt werden. Die Pumpen 38, 39 sind über elektrische Leitungen 40, 41 mit einer zweiten Elektronikeinheit 46 der elektronischen Steuereinheit 14 verbunden. Die Eingabeeinheiten 18, 19 sind über elektrische Leitungen 42 bis 45 mit der zweiten Elektronikeinheit 46 verbunden und enthalten ferner jeweils zwei Tasten 47, 48, die beispielsweise die Buchstaben A und B aufweisen. Durch Drücken der Tasten 47, 48 können die Pumpen 38, 39, die hier zur Verdeutlichung ebenfalls mit den Buchstaben A und B versehen sind, angesteuert werden, so daß aus den Behäl tern 36 bzw. 37 das gewünschte Mittel abgegeben wird. Die Abgabe erfolgt über Leitungen 50, 51 wahlweise zum Brausekopf 52 oder zum hier nicht weiter dargestellten Wasserauslauf, beispielsweise in eine Badewanne. Mittels der zweiten Elektronikeinheit 46 erfolgt also die Pumpensteuerung, wobei durch Betätigen der Tasten A bzw. B die Pumpen 38 bzw. 39 in Betrieb gesetzt werden. Durch die Anordnung der Eingabeeinheit 19 im Brausekopf 52 wird eine besonders einfache und zweckmäßige Bedienung im Rahmen der Erfindung gewährleistet.

Die Eingabeeinheiten 18, 19 enthalten darüber hinaus wenigstens eine weitere Taste 54, 55, die auf eine dritte Elektronikeinheit 56 mittels Leitungen 57, 58 geschaltet sind. Die dritte Elektronikeinheit 56 ist über eine weitere elektrische Leitung 59 mit Magnetventilen 60, 62 mit den Wasserleitungen 4, 6 verbunden. Durch Betätigen der Tasten 54, 55 kann also der Durchfluß von kaltem Wasser und von warmem Wasser gestoppt oder freigegeben werden.

In entsprechender Weise kann auch die Umschaltung des Mischwassers sowie der Lotion zum Brausekopf 52 oder zum Wasserauslauf erfolgen. Hierzu sind insbesondere Dreiwegeventile 64, 65, 66 vorgesehen, die über entsprechende Leitungen von der dritten Elektronikeinheit 56 ansteuerbar sind, um wahlweise die Ausgangsleitung 8 und die Pumpenleitungen 50, 51 mit den Leitungen zu verbinden, die zum Brausekopf 52 bzw. zum Wasserauslauf führen.

Bei dem oben erläuterten Ausführungsbeispiel erfolgt die Zuführung der Lotion mittels Pumpen. Im Rahmen der Erfindung können auch andere Zuführeinrichtungen vorgesehen sein. Insbesondere kann dies nach dem Prinzip der Strahlpumpe erfolgen. Die Leitungen 50, 51 werden dabei in geeigneter Weise an die Ausgangsleitung 8 angeschlossen, so daß durch den Fließdruck des Wassers in der Ausgangsleitung 8 in den Leitungen 50, 51 bedarfsweise ein Unterdruck erzeugt wird. Anstelle der Pumpen 38, 39 können dann Magnetventile vorgesehen sein, die bedarfsweise geöffnet werden und die Verbindung zur Lotion in den Behältern 36, 37 ermöglichen. Bei geöffneten Ventilen wird dann infolge des Unterdruckes die gewünschte Lotion vom fließenden Wasser der Ausgangsleitung angesaugt und diesem beigemengt.

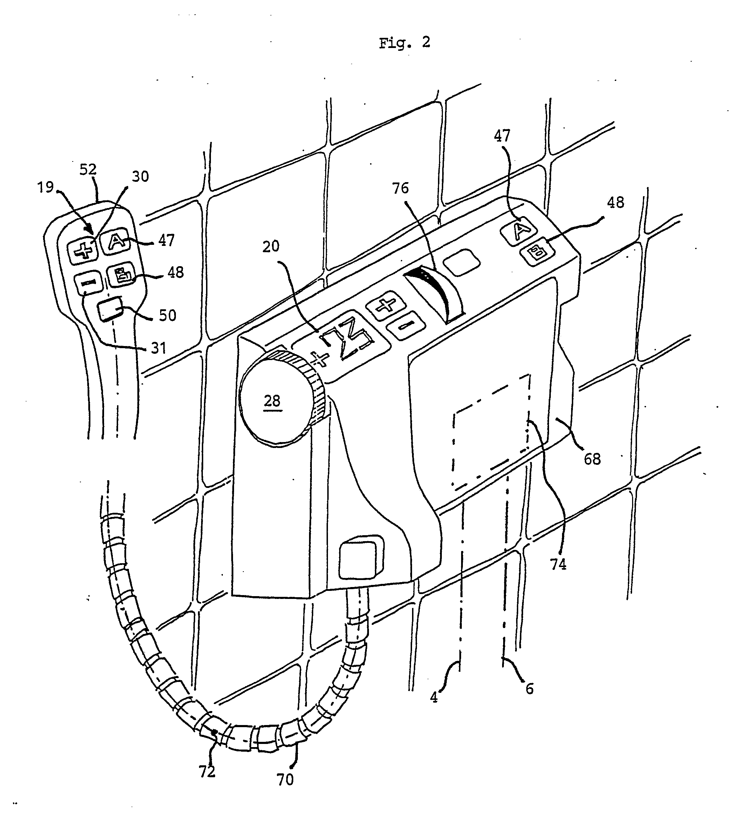

In Fig. 2 ist schematisch die gesamte Vorrichtung dargestellt, die als komplettes, vorgefertigtes Gerät an der Wand einer Dusche oder über einer Badewanne angeordnet ist. Die in der Wand unter den Kacheln in gewohnter Weise liegenden Wasserleitungen 4, 6 sind strichpunktiert angedeutet und in geeigneter Weise ist die Verbindung mit der Vorrichtung hergestellt. Die Vorrichtung enthält ein Gehäuse 68, in welchem die oben anhand von Fig. 1 erläuterten Bauteile angeordnet sind. An das Gehäuse 68 ist ein flexibler Schlauch 70 angeschlossen, der zum Brausekopf 52 führt. Der flexible Schlauch 70 dient zur Verbindung der Ausgangsleitung mit dem Brausekopf 52. Darüber hinaus enthält der flexible Schlauch 70 im Rahmen der Erfindung ein hier strichpunktiert angedeutetes Kabel 72, welches die elektrischen Leitungen zu der erfindungsgemäß dort vorgesehenen Eingabeeinheit 19 aufweist. Auf der Rückseite des Brausekopfes 52 sind die eingangs erläuterten Tasten 30, 31 zur Temperaturvorgabe, die Tasten 47, 48 zur Ansteuerung der Pumpen bzw. der Zufuhreinrichtungen der Lotion und schließlich auch die Taste 55 zur Wasserzufuhr bzw. Wasserumschaltung enthalten.

Das Gehäuse 68 enthält eine Aufnahmevorrichtung 74, in welcher der o.a. Akku, beispielsweise von unten her, einsetzbar ist. Die Speicherkapazität des Akkus wird mittels der elektronischen Steuereinheit überwacht und eine zu geringe Ladung kann beispielsweise durch Blinken der Ziffern der digitalen Anzeigeeinheit 20 angezeigt werden. Die Grundeinstellung der Temperatur erfolgt zweckmäßigerweise manuell mit dem Stellrad 28, mit welchem eine optische Anzeige 76 gekoppelt ist. Ein Benutzer kann durch Betätigen der Tasten 30, 31 die Temperatur erhöhen bzw. erniedrigen, wobei die in der Ausgangsleitung anstehende Temperatur des Mischwassers mittels der digitalen Anzeigeeinheit 20 einem Benutzer angezeigt wird.

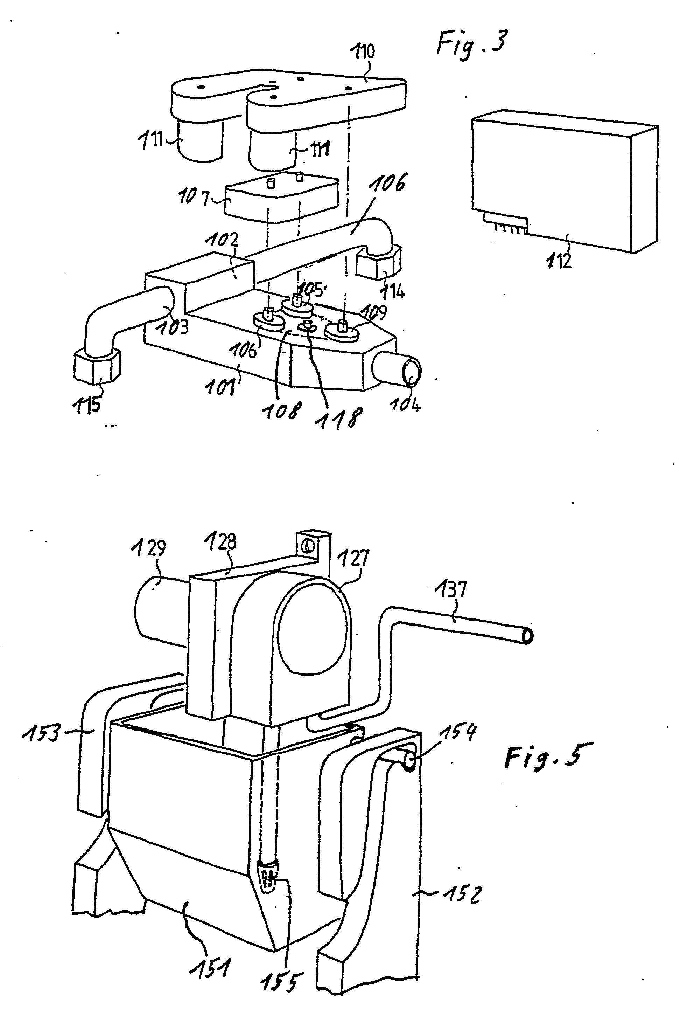

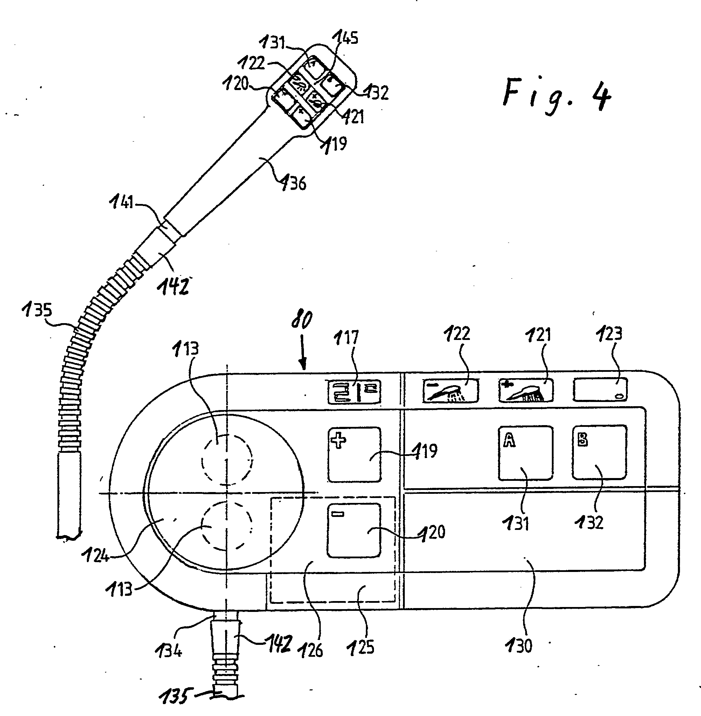

Fig. 3 zeigt in einer perspektivischen Darstellung die Mischarmatur mit einem Getriebe und einer Elektronikeinheit. Zum Armaturen-Gehäuse 101 ist eine Kaltwasserleitung 102 und eine Warmwasserleitung 103 geführt und es ist ferner eine Ausgangs leitung 104 für das Mischwasser vorhanden. Das kalte und das warme Wasser werden jeweils mittels eines separaten Ventils 105, 106, welche über ein Getriebe 107 erfindungsgemäß miteinander gekoppelt sind, reguliert. Wesentlich ist hierbei, daß beim Öffnen des Kaltwasser-Ventils 105 über das Getriebe 107 das Warmwasser-Ventil 106 geschlossen wird und umgekehrt. Das Armaturgehäuse 101 enthält eine den Ventilen 105, 106 nachgeschaltete Mischkammer 108, in welche das Mischwasser gelangt und mittels eines dritten Ventils 109 reguliert wird, das der Mischwasser-Ausgangsleitung 104 vorgeschaltet ist. Die genannten Bewegungen für die Kaltwasser- und Warmwasser-Regulierung sowie den Mischwasser-Auslauf sind über ein Getriebe 110 jeweils mit einem Elektroantrieb 111, der als Motor ausgebildet ist, verbunden, wobei mittels der eingebauten Elektronikeinheit 112 die Ansteuerung erfolgt. Im Rahmen der Erfindung können die beiden Bewegungen auch über zwei Stellräder (siehe Fig. 4) manuell durchgeführt werden. Damit ist auch bei einem eventuellen Stromausfall die Vorrichtung im Handbetrieb funktionsfähig. Die Anschlüsse 114, 115 für die Leitungen mit kaltem und warmen Wasser sind derart ausgelegt, daß durch einfaches Austauschen eines Anschlußbogens 116 die unterschliedlichen bauseits bedingten Abstände und auf der Baustelle üblichen Distanzen überbrückt werden können. Der Temperatur-Istwert des Wassers in der Mischkammer 108 wird mittels des Temperaturfühlers 118 gemessen.

Fig. 4 zeigt eine Gesamtansicht der Mischvorrichtung mit einem Gehäuse 80, welches an der Wand eines Dusch- oder Baderaumes befestigt ist und die in Fig. 3 erläuterte Mischarmatur abdeckt. Die Mischarmatur befindet sich im linken Teil, wobei hier strichpunktiert auch die bereits erwähnten Stellräder.113 zur manuellen Betätigung dargestellt sind. Das Gehäuse 80 enthält über den Stellrädern 113 einen abnehmbaren Deckel 124, so daß bedarfsweise die Stellräder 113 zur manuellen Bedienung der Mischarmatur zugänglich sind. Ferner ist in dem linken Teil des Gehäuses der Akku 126 auswechselbar angeordnet. Hierzu weist das Gehäuse 80 einen Deckel 125 auf und nach Öffnen desselben kann der Akku ausgetauscht werden. Die mit einem Plus- bzw. einem Minus-Zeichen versehenen Tasten 119, 120 wird der Sollwert der Mischtemperatur eingestellt. Auf der Anzeigeeinheit 117 wird in der Ruhestellung der mit dem Temperaturfühler in der Mischkammer gemessene Istwert dargestellt. Beim Betätigen der Tasten 119, 120 wird der Sollwert im Rahmen der Erfindung auf der gleichen Anzeigeeinheit 117 dargestellt. Die Umstellung erfolgt selbsttätig beim Betätigen der Tasten 119, 120. Gleichzeitig schaltet das Gerät automatisch auf die Betriebsstellung um. Die in Fig. 3 dargestellten Mischventile 105, 106 werden hierbei über den elektrischen Antrieb und das Getriebe 110 in die der eingestellten Temperatur entsprechende Position gebracht. Ferner sind Betätigungstasten 121 und 122 für das Mischwasser vorgesehen. Durch die Mischwasser-Plustaste 121 wird das Mischwasser-Auslaufventil 109 mittels des elektrischen Antriebes 111 über das Getriebs 110 geöffnet. Durch Betätigen der Plus- 121 oder Minustaste 112 wird ferner die Wasserauslaufmenge reguliert. Die Elektronik 112 reguliert nunmehr kontinuierlich die voreingestellte Wassertemperatur. Der mit dem Temperaturfühler 118 in der Mischkammer gemessene Istwert wird mit dem eingegebenen Sollwert verglichen und bei einer Abweichung von insbesondere mehr als 1 Grad Celsius automatisch nachreguliert. Die Nachregulierung wird erfindungsgemäß auch bei Änderungen des Drucks und/oder der Temperatur in den Zuführleitungen gewährleistet. Es bedarf keiner besonderen Hervorhebung, daß auch während des Duschens jederzeit die voreingestellte Temperatur durch Betätigen der Tasten 119, 120 verändert werden kann.

Die Mischvorrichtung enthält ferner eine Sicherheitseinrichtung, damit das Mischwasser eine maximal vorgegebene Temperatur nicht überschreitet. Hierzu ist die Elektronikeinheit 112 werkseitig auf eine maximale Temperatur eingestellt, und zwar zweckmäßig etwa 38 Grad Celsius. Wird eine höhere Temperatur gewünscht, so kann gleichwohl durch Betätigung der Temperatur-Plustaste 119 zusammen mit einer Schutztaste 123 diese elektronische Sperre erfindungsgemäß entriegelt werden. Nach dem Abstellen des Wassers wird erfindungsgemäß automatisch wieder auf den werkseitig vorgegebenen Grundwert von insbesondere 38 Grad Celsius zurückgestellt. Darüberhinaus wird nach Beendigung des Duschvorganges oder falls während einer bestimmten Zeit, insbesondere zwischen drei bis fünf Minuten, keine der Tasten betätigt wird, die Vorrichtung automatisch ausgeschaltet. Diese erfindungswesentliche Abschaltautomatik bewirkt:

- Das Ausflußventil wird geschlossen
- die Mischventile werden in die Stellung "Kalt" gefahren
- der Sollwert für das Mischwasser gelangt in die Stellung des Grundwertes
- der Regel- sowie Leistungsteil wird ausgeschaltet.

Durch diese Abschaltautomatik wird einerseits eine komfortable Betätigung und Handhabung erreicht und eine nicht unwesentliche Energieersparnis bewirkt. Die Mischvorrichtung schaltet automatisch in folgenden Fällen aus:

- Öffnen des Deckels 124 zur manuellen Betätigung
- Öffnen des Deckels 125 zum Auswechseln des Akkus 126
- Absinken der Spannung, insbesondere der Ausgangsspannung des Akkus, unter einen vorgegebenen Wert.

In den vorstehend genannten Fällen wird vor dem Ausschalten auf die Grundstellungen, nämlich Kalt, Geschlossen, Sollgrundwert, eingestellt. Die Anzeigeeinheit 117 dient im Rahmen der Erfindung auch dazu, das Absinken der Spannung des Akkus unter einen vorgegebenen Wert zur Anzeige zu bringen, damit ein Benutzer den Akku dann austauschen kann.

Die Vorrichtung enthält ferner die Spendereinheit, welche in zweckmäßiger Weise im anderen Teil unter dem Gehäuse 80 angeordnet ist. Diese Spender- oder Fördereinheit ist im anderen Teil des Gehäuses 80 angeordnet, und zwar gemäß Fig. 4 im rechten Teil desselben. Das Gehäuse weist einen nach vorn vor die Zeichenebene entfernbaren, insbesondere aufklappbaren Deckel 130 auf, hinter welchem sich wenigstens ein Behälter für eine Lotion, Duschmittel, Shampoo oder dergleichen befin det. Bei der hier dargestellten Ausführungsform sind zwei solche Behälter vorhanden, damit zwei verschiedene Mittel aufgenommen und weitergeleitet werden können. Es sind nachfolgend noch zu erläuternde Pumpen vorhanden, wobei die Ansteuerung über die Elektronikeinheit durch Betätigen der Tasten 131, 132 erfolgt.

Die Ausgangsleitung des Gehäuses der Mischarmatur ist auf den Anschluß 134 für einen Brauseschlauch 135 geführt. Der Brauseschlauch enthält fünf Teile, und zwar einen Wasserschlauch 133, zwei Schläuche 137 für die Förderung und Ausgabe der in den genannten Behältern befindlichen Mittel, ein Elektrokabel mit einem Mehrfachstecker und eine kupplung 138 zum Anschluß an die Elektronikeinheit sowie eine bewegliche Außenhülle 139. Für den Brauseschlauch ist ein Geräteanschluß 134 und ein Anschluß 141 des Brausekopfes 136 versehen. An den beiden Schlauchenden befinden sich Mehrfach-Kupplungsstücke mit Überwurfmuttern 142, wobei geeignete Dichtungen vorgesehen sind.

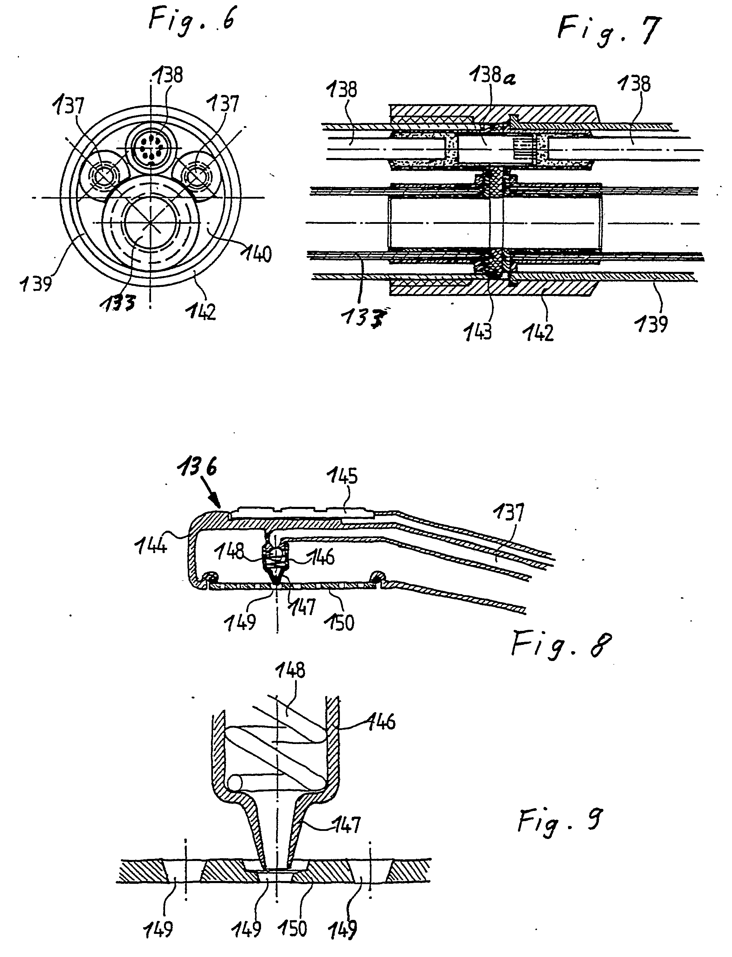

In Fig. 5 ist von der Spender- oder Fördereinheit der eine Behälter 151 dargestellt, welcher hinter dem genannten Deckel des Gehäuses sich befindet. Der Behälter 151 ist in Führungen 152, 153 aus dem Gehäuse herausnehmbar angeordnet. Hierzu weisen die Führungen 152, 153 entsprechende Nuten auf, in welche seitliche Bolzen 154 des Behälters 151 eingeführt sind. Wie ersichtlich, kann der Behälter 151 nach kurzem Hochheben und einer kleinen Bewegung nach vorn abgesenkt werden. Dieser Spenderteil enthält ferner eine Pumpe 127, welche zweckmäßig als Schlauchpumpe ausgebildet ist und von einem Elektromotor 129 über ein Getriebe 128 angetrieben wird. An die Pumpe 127 ist der zum Brausekopf führende Schlauch 137 angeschlossen. Wie bereits festgestellt, enthält die gesamte Spender- oder Fördereinheit bei dieser Ausführungsform wenigstens zwei derart augebaute Spenderteile. Die Betätigung erfolgt über die in Fig. 4 mit den Buchstaben A und B bezeichneten Tasten 131 und 132, und zwar über die bereits beschriebene Elektronikeinheit. In den Behälter 131 ragt von oben ein Ansaugstutzen 155, durch welchen das Mittel angesaugt und über den Schlauch 137 ge fördert wird.

Fig. 6 und 7 zeigen die Mehrfach-Kupplung in einem radialen bzw. axialen Schnitt. Von der Außenhülle 139 umgeben ist der Brauseschlauch 133 für das Mischwasser, die beiden Schläuche 137 für das Mittel sowie das Elektrokabel 138. Das Elektrokabel enthält im Inneren mehrere Adern, die mittels geeigneten Steckverbindern 138a elektrisch leitend miteinander verbunden sind. An beiden Schlauchenden befindet sich jeweils ein Mehrfach-Kupplungsstück 140, welches mittels der Überwurfmutter 142 mit dem jeweiligen Anschluß zu verbinden ist. Der das Wasser leitende Brauseschlauch 133 ist mittels einer Dichtung 143 dicht angeschlossen. Diese erfindungsgemäß vorgeschlagene Mehrfach-Kupplung ermöglicht ein problemloses Auswechseln des Brausekopfes bzw. des gesamten Brauseschlauches 135.

Fig. 8 und 9 zeigen schematischen den Brausekopf 136, der ein Gehäuse 144 und die Tastatur 145 enthält. Über diese Bedienungs-Tastatur 145 sind folgende Funktionen direkt am Brausekopf 136 vorzunehmen:
- Öffnen und Schließen des Mischwasser-Auslaufventils (Regulieren der Wasserauslaufmenge),
- Verändern der Wassertemperatur,
- Anforderung eines der Mittel A oder B.

Wie in Verbindung mit Fig. 4 ersichtlich, enthält diese Tastatur 145 insgesamt sechs Tasten 119 bis 122 sowie 131, 132, mit welchen die gleichen Funktionen wie mit den entsprechenden Tasten des an der Wand montierten Gerätes mit dem Gehäuse 80 auszulösen sind. Im Brausekopf ist erfindungsgemäß ein Ventil 146 mit einer Düse 147 und einer Auslaufsicherung 148 angeordnet. Dieses Ventil ist derart angeordnet, daß das Mittel, sei es Duschmittel, Lotion oder dergleichen, durch eine normale Auslaßöffnung 149 des Wassersiebes 150 fließen kann. Mittels de Auslaufsicherung wird gewährleistet, daß aus dem Schlauch 137 das Mittel nur dann austreten kann, wenn von der Pumpe der Spendereinheit Mittel unter Druck gefördert wird.

Die Spendereinheit kann im Rahmen dieser Erfindung in zwei Betriebsarten eingesetzt werden:

1. Anforderung von Mittel bei abgestelltem Wasserstrahl,

2. Anforderung von Mittel bei laufendem Wasserstrahl.

Das Wasser wird durch Drücken der mit dem Minuszeichen versehenen Taste 122, sei es am Gerät bzw. dem Gehäuse 80 oder dem Brausekopf 136 abgestellt. Durch Betätigung der A-Taste 131 oder der B-Taste 132 am Gerät 80 oder am Brausekopf 136 wird das entsprechende Mittel durch den zugeordneten Schlauch 37 in den Brausekopf 136 gepumpt und gelangt dort über das Ventil 146 und die Düse 147 durch die Auslauföffnung 149 des Wassersiebes 150. Ist hingegen der Wasserstrahl eingestellt, so wird bei Betätigung der A-Taste 131 oder B-Taste 132, sei es am Gerät 80 oder am Brausekopf 136 bei laufendem Wasserstrahl das Mittel aufgrund der besonderen Anordnung der Düse 147 mit dem austretenden Wasserstrahl vermischt.

Bezugszeichenliste

2 Mischarmatur
4, 6 Wasserleitung
8 Ausgangsleitung
10 Temperaturfühler
12 elektrische Leitung
14 elektronische Steuereinheit
16 erste Elektronikeinheit
18, 19 Eingabeeinheit
20 Anzeigeeinheit
22-25 elektrische Leitung
26 Stelleinheit, Gleichstrommotor
28 Stellrad
29 Verbrühschutz
30, 31 Taste
32 Akku
34 Lotionspender
36, 37 Lotionbehälter
38, 39 Pumpe
40-45 elektrische Leitung
46 zweite Elektronikeinheit
47, 48 Taste
50, 51 Leitung
52 Brausekopf
54, 55 weitere Taste
56 dritte Elektronikeinheit
57-59 elektrische Leitung
60, 62 Magnetventil
64-66 Dreiwegeventil
68 Gehäuse
70 Schlauch
72 Kabel
74 Aufnahmevorrichtung
76 optische Anzeige
80 Gehäuse
101 Armaturgehäuse
102 Kalt-Wasserleitung
103 Warm-Wasserleitung
104 Ausgangsleitung
105, 106 Ventil
108 Mischkammer
109 Ventil für Mischwasser
110 Getriebe
111 elektrische Antrieb
112 Elektronikeinheit
113 Stellrad
114, 115 Anschluß
116 Anschlußbogen
117 Anzeigeeinheit
118 Temperaturfühler
119 bis 122 Taste
123 Schutztaste
124, 125 Deckel
126 Akku
127 Pumpe
128 Getriebe
129 Motor
130 Deckel, Klappe
131, 132 Taste

133 Wasserschlauch
134 Anschluß
135 Brauseschlauch
136 Brausekopf
137 Schlauch für das Mittel
138 Kupplung
139 Außenhülle
140 Kupplungsstück
141 Anschluß
142 Überwurfmutter
143 Dichtung
144 Gehäuse von 136
145 Tastatur
146 Ventil
147 Düse
148 Auslauf-Sicherung
149 Auslauf-Öffnung
150 Wassersieb
151 Behälter
152, 153 Führung
154 Bolzen
155 Ansaugstutzen

**Ansprüche**

1. Mischvorrichtung, insbesondere für Duschen oder Bäder, mit einer Mischarmatur, welcher warmes und kaltes Wasser zuführbar ist und welche ein Stellglied zum Einstellen des Mischungsverhältnisses aufweist,
dadurch gekennzeichnet,
daß eine elektronische Steuereinheit (14) und eine Eingabeeinheit (18, 19) vorgesehen sind,
daß eine Speichereinheit (34) mit wenigstens einem Behälter (36, 37) zum Aufnahme eines Mittels vorgesehen ist,
und daß eine bevorzugt als Pumpe ausgebildete Zuführeinrichtung (38, 39) vorgesehen ist, mittels welcher bei Betätigung der Eingabeeinheit (18, 19) das Mittel durch geeignete Leitungen, insbesondere Schläuche, aus der Spendereinheit (34) förderbar ist.

2. Vorrichtung nach Anspruch 1, dadurch gekennzeichnet, daß die Mischarmatur (2) und die elektronische Steuereinheit (14) sowie ein zur Stromversorgung der elektronischen Steuereinheit (14) vorgesehener Akku (32) in einem Gehäuse (68) angeordnet sind.

3. Vorrichtung nach Anspruch 1 oder 2, dadurch gekennzeichnet, daß eine Aufnahmeeinheit (74) vorgesehen ist, in welche der Akku (32) einsetzbar ist, wobei die elektrische Verbindung mit der elektronischen Steuereinheit beim Einsetzen erfolgt.

4. Vorrichtung nach einem der Ansprüche 1 bis 3, dadurch gekennzeichnet, daß mit der elektronischen Steuereinheit (14) eine Anzeigeeinheit (20) für die mittels des Temperaturfühlers (10) erfaßte Temperatur des Mischwassers vorgesehen ist.

5. Vorrichtung nach Anspruch 4, dadurch gekennzeichnet, daß die Anzeigeeinheit (20) insbesondere auf der Oberseite des Gehäuses (68) angeordnet ist und/oder daß insbesondere auf der Oberseite des Gehäuses (68) die Eingabeeinheit (18) zur Einstellung der Temperatur angeordnet ist.

6. Vorrichtung nach einem der ansprüche 1 bis 5, dadurch gekennzeichnet, daß der Spendereinheit (34), insbesondere als Pumpen (38, 39) ausgebildete, Zuführeinrichtungen aufweist, die den Behältern (36, 37) nachgeschaltet sind und welche über die elektronische Steuereinheit (14) ansteuerbar sind, wobei mittels der Eingabeeinheit (18, 19) die elektronische Steuereinheit (14) zur Aktivierung des Spenders (34) ansteuerbar ist.

7. Vorrichtung nach einem der Ansprüche 1 bis 6, dadurch gekennzeichnet, daß im Gehäuse (68) die Eingabeeinheit (18), die Lotionbehälter (36, 37) und die Zuführeinrichtungen angeordnet sind und/oder daß die Eingabeeinheit (19) getrennt von dem Gehäuse (68) angeordnet ist, wobei mittels elektrischen Leitungen (24, 44, 45) die elektrische Verbindung hergestellt ist.

8. Vorrichtung nach Anspruch 8, dadurch gekennzeichnet, daß die Eingabeeinheit (19) in einem Brausekopf (52) angeordnet ist und daß in einem flexiblen Schlauch (70) zusätzlich zu einem an sich bekannten Schlauch für das Mischwasser ein Kabel (72) angeordnet ist, mittels welchem die elektrische Verbindung der Eingabeeinheit (19) zur elektronischen Steuereinheit (14) erfolgt.

9. Vorrichtung, insbesondere nach einem der Ansprüche 1 bis 8, dadurch gekennzeichnet, daß die Mischarmatur ein Gehäuse (101) mit einer Mischkammer (108) aufweist, in welcher bevorzugt der Temperaturfühler (118) angeordnet ist.

10. Vorrichtung, insbesondere nach einem de Ansprüche 1 bis 10, dadurch gekennzeichnet, daß die zur Einstellung der Menge des warmen oder kalten Wassers vorgesehenen Ventile (105, 106) mittels eines Getriebes (107) gekoppelt sind, wobei die Ven tile (105, 106) bevorzugt separat über jeweils einen elektrischen Antrieb (111) betätigbar sind.

11. Vorrichtung nach einem der Ansprüche 1 bis 10, dadurch gekennzeichnet, daß die Mischarmatur einerseits und die Spendereinheit andererseits als separate Funktionsgruppen ausgebildet und angeordnet sind und zweckmäßig mittels eines Gehäuses (80) abgedeckt werden.

12. Vorrichtung nach einem der Ansprüche 1 bis 11, dadurch gekennzeichnet, daß das Gehäuse (80) einen lösbar mit diesem verbundenen, insbesondere aufklappbaren, Deckel (130) aufweist, hinter welchem wenigstens der eine Behälter (151) für das Mittel angeordnet ist.

13. Vorrichtung nach einem der Ansprüche 1 bis 12, dadurch gekennzeichnet, daß der Behälter (151) in Führungen (152, 153) angeordnet ist und aus diesen, bevorzugt über geeignete Nuten oder dergleichen, entfernbar ist.

14. Vorrichtung nach einem der Ansprüche 1 bis 13, dadurch gekennzeichnet, daß in den Behälter eine Leitung mit einem Ansaugstutzen (155) hineinragt, welche Leitung mit der Pumpe (127) verbunden ist, um das Mittel über einen Schlauch (137) zweckmäßig zum Brausekopf zu fördern, wobei die Pumpe (127) bevorzugt als eine Schlauchpumpe ausgebildet ist und/oder über ein Getriebe (128) von einem Elektromotor (129) antreibbar ist.

15. Vorrichtung nach einem der Ansprüche 1 bis 14, dadurch gekennzeichnet, daß die Ventile (105, 106) für das warme und das kalte Wasser und/oder das Ventil (109) für das Mischwasser mittels eines Stellrades (113) bedarfsweise manuell betätigbar sind.

Fig. 1

Fig. 2

Fig.3

Fig.5

Fig. 4

Fig. 6

Fig. 7

Fig. 8

Fig. 9